# FASCICULE DE BREVET EUROPEEN

(11) **EP 3 377 306 B1**
(45) Date de publication et mention de la délivrance du brevet: **09.10.2024**
(21) Numéro de dépôt: 16806273.5
(22) Date de dépôt: 10.11.2016
(51) Int. Cl.: B29C 70/08, B29C 70/30, B63B 5/24, B29K 311/10, B29L 31/30, B29C 70/00

(54) **PROCÉDÉ ET DISPOSITIF DE MOULAGE D'UNE PIÈCE COMPOSITE, PIÈCE COMPOSITE ET EMBARCATION**
VERFAHREN UND VORRICHTUNG ZUM FORMEN EINES VERBUNDBAUTEILS, VERBUNDBAUTEIL UND FAHRZEUG
METHOD AND DEVICE FOR MOULDING A COMPOSITE COMPONENT, COMPOSITE COMPONENT AND CRAFT

(30) Priorité: 20.11.2015 FR 1561205
(43) Date de publication de la demande: 26.09.2018
(73) Titulaire: GECO GROUPE, 30290 Laudun L'Ardoise (FR)
(72) Inventeur: ROURE, Frédéric, 30290 Laudun l'Ardoise (FR)
(74) Mandataire: Cornuejols, Georges
(86) Numéro de dépôt international: PCT/FR2016/052927
(87) Numéro de publication internationale: WO 2017/085382

(56) Documents cités:
- EP-A1- 1 151 856
- EP-A2- 2 463 083
- CH-A5- 588 032
- FR-A1- 2 483 846
- FR-A1- 2 966 076
- GB-A- 877 615
- US-A1- 2011 229 698

## Description

### DOMAINE TECHNIQUE DE L'INVENTION

La présente invention vise un procédé de moulage d'une pièce composite, une pièce composite et une embarcation. Elle s'applique, notamment, à la fabrication d'embarcations légères de loisir.

### ETAT DE LA TECHNIQUE

Dans le domaine de la fabrication de pièces composites, et particulièrement d'embarcation légères de loisir dont une paroi est formée d'une pièce composite nce, une technique de fabrication consiste à mouler la pièce composite par la superposition de couches sur un moule.

Les couches superposées sont de deux types :
- mat en fibres, généralement formé de fibres de verre, disposées sans ordre et
- tissu en fibres, généralement formé fibres de verre ou de polyester, dont les fibres sont disposées et tissées de façon régulière selon deux axes, dit « roving ».

Entre ces couches, une résine est appliquée de manière à coller les couches les unes aux autres.

Les pièces composites ainsi fabriquées présentent l'avantage de nécessiter une main d'oeuvre peu qualifiée et un coût de fabrication faible.

Cependant, ces pièces composites présentent le désavantage de ne pas être biodégradables et difficilement recyclables et, du fait de leur faible coût, dans le cas d'embarcations légères de loisir et de plaisance, souvent abandonnées par les utilisateurs. Ainsi, de telles pièces composites et embarcations endommagées polluent les terrains naturels, les cours d'eau et les rivages.

On connaît la demande de brevet GB 877 615 qui divulgue un procédé de production d'une structure en sandwich qui n'est pas aisément recyclable.

### OBJET DE L'INVENTION

La présente invention vise à remédier à tout ou partie de ces inconvénients.

A cet effet, selon un premier aspect, la présente invention vise un procédé de moulage d'une pièce composite, qui comporte :
- une étape de positionnement d'une couche de géotextile sur un moule pour qu'une face inférieure de la couche de géotextile soit positionnée contre le moule,
- une première étape d'enduction d'une face supérieure de la couche de géotextile positionnée au cours de l'étape de positionnement par une résine biodégradable,
- une étape de collage d'une couche de fibres, présentant une rigidité supérieure à la couche de géotextile, contre la couche de géotextile enduite et
- une deuxième étape d'enduction d'une face supérieure de la couche de fibres par une résine biodégradable.

Grâce à ces dispositions, le géotextile peut être biologiquement dégradé en cas d'abandon de la pièce composite par un utilisateur. De cette manière, l'empreinte écologique de la pièce composite est réduite tout en maintenant les avantages de ce mode de fabrication.

Dans des modes de réalisation, le procédé objet de la présente invention comporte, en aval de l'étape de positionnement et/ou de l'étape de collage, une étape de tamponnage de la face supérieure de la couche la plus éloignée du moule.

Ces modes de réalisation permettent d'évacuer les bulles d'air contenues dans l'espace entre le moule et le géotextile ou entre la couche de fibres et le géotextile.

Dans des modes de réalisation, le procédé objet de la présente invention comporte une étape de positionnement de nervures en matériau naturel épousant la forme du moule, ces nervures étant couvertes par la couche de géotextile lors de l'étape de positionnement de ce géotextile.

Ces modes de réalisation permettent de rigidifier la pièce composite moulée.

Dans des modes de réalisation, le procédé objet de la présente invention comporte, en aval de la deuxième étape d'enduction, une étape supplémentaire de positionnement d'une couche de géotextile pour qu'une face inférieure de la couche de géotextile soit positionnée contre la couche de fibres.

Ces modes de réalisation permettent la réalisation d'une épaisseur multicouche de la pièce composite moulée.

Selon un deuxième aspect, la présente divulgation vise un dispositif de moulage d'une pièce composite, qui comporte :
- une couche de géotextile présentant une face inférieure pour être positionnée contre un moule,
- une résine biodégradable pour enduire une face supérieure de la couche de géotextile,
- une couche de fibres, présentant une rigidité supérieure à la couche de géotextile, pour être positionné contre la couche de géotextile enduite,
- une résine biodégradable pour enduire une face supérieure de la couche de fibres.

Les buts, avantages et caractéristiques particulières du dispositif objet de la présente divulgation étant similaires à ceux du procédé objet de la présente invention, ils ne sont pas rappelés ici.

Dans des modes de réalisation, la couche de géotextile comporte des fragments de fibre technique synthétique.

Ces modes de réalisation permettent de recycler des déchets produits par l'industrie de produits pétrosourcés.

Dans des modes de réalisation, les fragments de fibre technique synthétique sont des sous-produits et/ou des déchets de fibre de carbone.

Ces modes de réalisation permettent de recycler des déchets produits par l'industrie de produits pétrosourcés.

Dans des modes de réalisation, le géotextile mis en oeuvre est un géotextile de fibres naturelles non tissées.

Dans des modes de réalisation, le dispositif comporte au moins une nervure en matériau naturel pour être positionnée contre le moule.

Dans des modes de réalisation, la couche de fibres est une couche en fibres naturelles biodégradables.

Selon un troisième aspect, la présente invention vise une pièce composite, qui comporte, successivement, dans son épaisseur :
- une couche de géotextile,
- une résine biodégradable enduite contre la couche de géotextile,
- une couche de fibres, présentant une rigidité supérieure à la couche de géotextile,
- une résine biodégradable enduite contre la couche de fibres.

Les buts, avantages et caractéristiques particulières de la pièce composite objet de la présente invention étant similaires à ceux du procédé objet de la présente invention, ils ne sont pas rappelés ici.

Dans des modes de réalisation, la pièce composite objet de la présente invention comporte, de plus, des nervures.

Selon un quatrième aspect, la présente invention vise une embarcation qui comporte une paroi formée d'au moins une pièce composite objet de la présente invention.

Les buts, avantages et caractéristiques particulières de l'embarcation objet de la présente invention étant similaires à ceux du procédé objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du procédé, de la pièce composite et de l'embarcation objets de la présente invention, en regard des dessins annexés, dans lesquels :
- la figure 1 représente, schématiquement et sous forme d'un logigramme, une succession d'étapes particulière du procédé objet de la présente invention,
- la figure 2 représente, schématiquement, une mode de réalisation particulier du dispositif,
- la figure 3 représente, schématiquement et en coupe, un mode de réalisation particulier de l'embarcation objet de la présente invention et
- la figure 4 représente, schématiquement et en coupe, un mode de réalisation particulier de la pièce composite objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On note dès à présent que les figures ne sont pas à l'échelle.

On note, dès à présent, que les fibres formant les couches de fibres décrites ci-après présentent, préférentiellement, une longueur supérieure à sept centimètres.

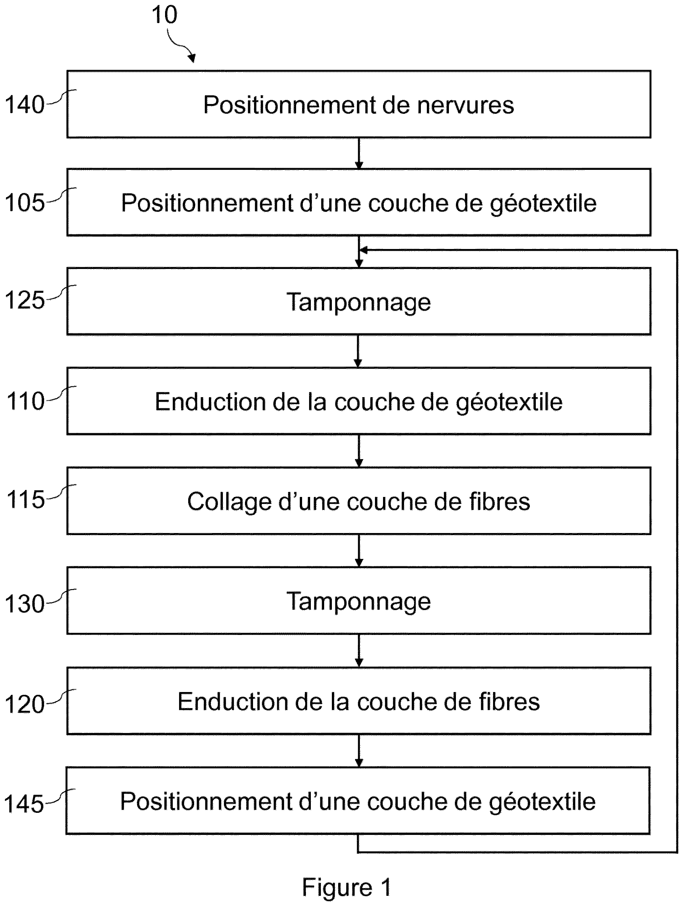

On observe, sur la figure 1, schématiquement et sous forme d'un logigramme, une succession d'étapes particulière du procédé 10 objet de la présente invention. Ce procédé 10 de moulage d'une pièce composite comporte :
- une étape 105 de positionnement d'une couche de géotextile sur un moule pour qu'une face inférieure de la couche de géotextile soit positionnée contre le moule,
- une première étape 110 d'enduction d'une face supérieure de la couche de géotextile positionnée au cours de l'étape 105 de positionnement par une résine biodégradable,
- une étape 115 de collage d'une couche de fibres, présentant une rigidité supérieure à la couche de géotextile, contre la couche de géotextile enduite et
- une deuxième étape 120 d'enduction d'une face supérieure de la couche de fibres par une résine biodégradable.

Si la pièce composite moulée doit avoir une forme incurvée, telle une paroi d'embarcation par exemple, un moule est positionné sur une surface rigide en amont de la réalisation de l'étape 105 de positionnement. Ce moule est concave ou convexe :
- si le moule est concave, l'épaisseur de la pièce composite ou de l'embarcation est réalisée de l'extérieur vers l'intérieur et
- si le moule est convexe, l'épaisseur de la pièce composite ou de l'embarcation est réalisée de l'intérieur vers l'extérieur.

Préférentiellement, une résine biodégradable est positionnée entre le moule et la couche de géotextile positionnée au cours de l'étape de positionnement 105.

Au cours de l'étape de positionnement 105 d'une couche de géotextile, un utilisateur ou un automate dépose contre le moule la couche de géotextile de manière à ce que cette couche de géotextile épouse la forme du moule.

Cette couche de géotextile est enduite, au cours de l'étape d'enduction 110, d'une résine biodégradable. Cette résine biodégradable est, par exemple :
- la résine « Bioresin 2 T MD 622-T » ou « Bioresin 2 T MD 625-T » de la société Bioresin ou
- la résine « EcoComp UV-L » (Marque déposée) de la société Substainable Composites Ltd.

La résine utilisée peut être thermodurcissable, durcie par irradiation ultraviolette ou durcie au contact de l'air ambiant.

Au cours de l'étape de collage 115, une couche de fibres est positionnée contre la couche de géotextile de manière à en épouser la forme, c'est-à-dire à épouser la forme du moule. La résine enduite sur le géotextile permet le collage de la couche de fibres.

Le matériau composant la couche de fibre est choisi pour présenter une plus grande rigidité que le matériau composant la couche de géotextile. On appelle rigidité la résistance à la torsion, à la déchirure et au perçage.

Au cours de l'étape d'enduction 120, la couche de fibre est enduite d'une résine similaire à la résine mise en oeuvre au cours de l'étape d'enduction 110.

Dans des variantes, une couche de fibres est positionnée contre le moule au cours de l'étape de positionnement 105 et une couche de géotextile est collée à cette couche de fibre au cours de l'étape de collage 115.

Dans des modes de réalisation, tel que celui représenté en figure 1, le procédé 10 comporte en aval de l'étape 105 de positionnement et/ou de l'étape 115 de collage, une étape, 125 ou 130, de tamponnage de la face supérieure de la couche la plus éloignée du moule.

Au cours de chaque étape de tamponnage, 125 ou 130, une masse rigide est plaquée à répétition contre la face supérieure de la couche la plus éloignée du moule de manière à provoquer l'évacuation des bulles d'air contenue entre cette couche et une couche ou le moule en dessous.

Préférentiellement, le procédé 10 comporte une étape de tamponnage 125 après l'étape de positionnement 105 et une étape de tamponnage 130 après l'étape de collage 115.

Dans des modes de réalisation, tel que celui représenté en figure 1, le procédé 10 comporte une étape 140 de positionnement de nervures en matériau naturel épousant la forme du moule, ces nervures étant couvertes par la couche de géotextile lors de l'étape 105 de positionnement de ce géotextile.

Les nervures sont, par exemple, des tiges en bois ou en métal positionnées contre le moule ou entre deux couches successives. Ces tiges présentent, par exemple, la forme de barrettes présentant une rigidité supérieure à la rigidité de la couche de fibres. Ces barrettes sont déformées de manière à épouser la forme du moule. Dans des variantes, les barrettes sont positionnées de manière à former un quadrillage.

Dans des modes de réalisation, tel que celui représenté en figure 1, le procédé 10 comporte, en aval de la deuxième étape 120 d'enduction, une étape 145 supplémentaire de positionnement d'une couche de géotextile pour qu'une face inférieure de la couche de géotextile soit positionnée contre la couche de fibres.

Cette étape supplémentaire de positionnement 145 est réalisée de manière similaire à l'étape de positionnement 105 à cela près que la couche de géotextile est positionnée contre la couche de fibres au lieu du moule.

Dans des variantes, les étapes d'enduction 110, de collage 115, d'enduction 120 et de positionnement 145 sont réalisées successivement de manière itérative.

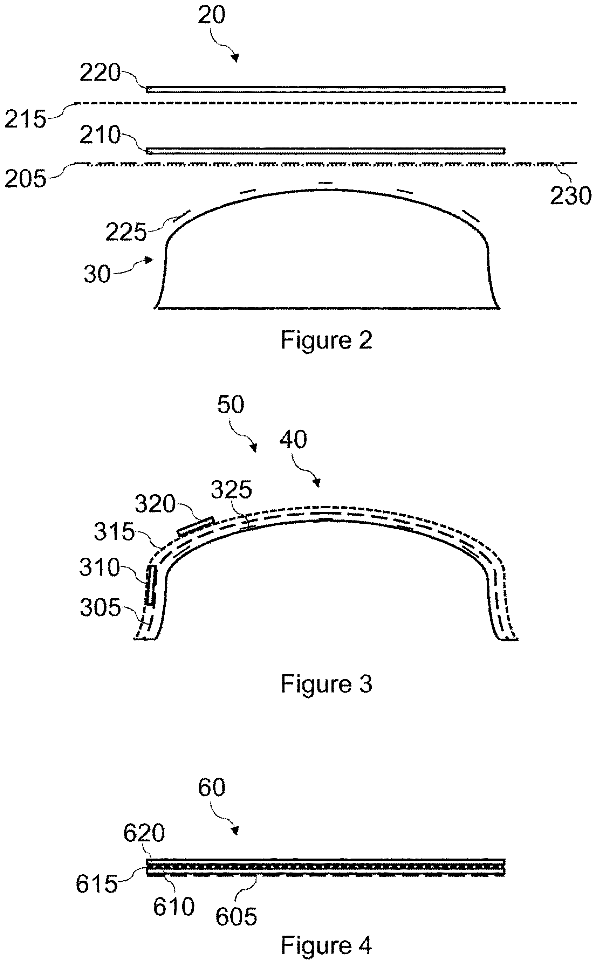

On observe, sur la figure 2, schématiquement et en coupe, un mode de réalisation particulier du dispositif 20 objet de la présente invention. Ce dispositif 20 de moulage d'une pièce composite comporte :
- une couche 205 de géotextile présentant une face inférieure pour être positionnée contre un moule 30,
- une résine 210 biodégradable pour enduire une face supérieure de la couche de géotextile,
- une couche 215 de fibres, présentant une rigidité supérieure à la couche de géotextile, pour être positionné contre la couche de géotextile enduite,
- une résine 220 biodégradable pour enduire une face supérieure de la couche de fibres.

La couche de géotextile 205 est formée d'un géotextile biodégradable, tel de la toile de jute par exemple.

Préférentiellement, le géotextile mis en oeuvre est un géotextile de fibres naturelles non tissées. Ce géotextile non tissé comporte :
- des tiges de végétaux écrasées d'un diamètre supérieur à cinq millimètres,
- des fragments de tiges végétales et
- des fibres végétales partiellement attachées aux dites tiges écrasées,
les tiges et fragments de tiges étant entrelacés par des liaisons mécaniques produites par projection d'eau.

Ce géotextile est réalisé, par exemple, par la mise en oeuvre d'un procédé comportant :
- une étape de disposition de végétaux en une nappe de tiges de végétaux écrasées d'un diamètre supérieure à cinq millimètres des fragments de tiges végétales et de fibres végétales brutes partiellement attachées aux dites tiges écrasées et
- une étape de projection d'eau sur ladite nappe pour former des liaisons mécaniques entre les tiges de végétaux écrasées, les fragments de tiges végétales et les fibres végétales de ladite nappe.

Ce procédé comporte, par exemple :
- une étape d'introduction de végétaux, sous la forme de végétaux de grande dimension, tel des tiges mesurant jusqu'à 2,5 mètres par exemple,
- une étape de réduction partielle des végétaux en tiges pour former des éléments de tige d'une longueur préférentiellement supérieure à vingt centimètres, et préférentiellement supérieure à cinquante centimètres,
- une étape d'écrasement des végétaux pour former une nappe de tiges de végétaux écrasées d'un diamètre supérieure à cinq millimètres, de fragments de tiges végétales et de fibres végétales brutes partiellement attachées aux dites tiges écrasées,
- une étape d'orientation des tiges et/ou des fibres selon des directions différentes,
- une étape d'harmonisation de l'épaisseur de la nappe de fibres,
- une étape d'incorporation dans les fibres de cordes ou de câbles parallèles à la longueur de la nappe de fibres,
- une étape de création de liaisons mécaniques entre les fibres de la nappe, dans l'épaisseur de la nappe, par projection d'eau sous pression sur les fibres végétales ou, en variante, avec une machine à piquer multi-aiguilles.

La matière végétale utilisée pour la mise en oeuvre de ce procédé est, par exemple, un ensemble de fibres de chanvre. L'utilisation de matière végétale permet, notamment, de rendre le géotextile biodégradable. La couche de fibre est, par exemple, une couche de fibres de naturelles biodégradables tissées ou non tissées. Ces fibres naturelles sont, par exemple, du chanvre.

Dans des modes de réalisation, la couche 205 de géotextile comporte des fragments 230 de fibre technique synthétique.

On appelle « fibre technique », une fibre qui permet la fabrication de textile, cette fibre présentant des caractéristiques leur permettant de rentrer en composition dans des textiles utilisés dans des milieux hostiles. On appelle parfois de telles fibres des « textiles techniques ».

Dans des modes de réalisation, les fragments 230 de fibre technique synthétique sont des sous-produits et/ou des déchets de fibre de carbone.

Ces fragments de fibre technique sont, par exemple, des déchets obtenus lors de la création de produits pétrosourcés. Ces déchets de fibre de carbone sont obtenus, par exemple, dans les industries automobile ou aéronautique et présentent des difficultés pour être recyclées.

Dans des modes de réalisation préférentiels, tel que représenté en figure 2, le dispositif 10 comporte au moins une nervure 225 en matériau naturel pour être positionnée contre le moule 30. Chaque nervure 225 est, par exemple, une barrette ou une lamelle en bois.

On observe, sur la figure 3, schématiquement et en coupe, un mode de réalisation particulier de l'embarcation 40 objet de la présente invention. Cette embarcation 40, comporte une paroi formée d'au moins une pièce composite comportant, successivement, dans son épaisseur :
- une couche 305 de géotextile,
- une résine 310 biodégradable enduite contre la couche de géotextile,
- une couche 315 de fibres, présentant une rigidité supérieure à la couche de géotextile et
- une résine 320 biodégradable enduite contre la couche de fibres.

Dans des modes de réalisation préférentiels, tel que représenté en figure 3, l'embarcation 40 comporte, de plus, des nervures 325.

On observe, sur la figure 4, schématiquement et en coupe, un mode de réalisation particulier de la pièce composite 60 objet de la présente invention. Cette pièce composite, formée par moulage, comporte successivement, dans son épaisseur :
- une couche 605 de géotextile,
- une résine 610 biodégradable enduite contre la couche de géotextile,
- une couche 615 de fibres, présentant une rigidité supérieure à la couche de géotextile et une résine 620 biodégradable enduite contre la couche de fibres.

La pièce composite 60 présente, en figure 4, une forme plane mais peut présenter n'importe quelle forme qui soit le négatif d'un moule contre lequel la pièce 60 est moulée.

## Revendications

1. Procédé (10) de moulage d'une pièce composite, comportant :
- une étape (105) de positionnement d'une couche de géotextile sur un moule pour qu'une face inférieure de la couche de géotextile soit positionnée contre le moule,
- une première étape (110) d'enduction d'une face supérieure de la couche de géotextile positionnée au cours de l'étape de positionnement par une résine biodégradable,
- une étape (115) de collage d'une couche de fibres, présentant une rigidité supérieure à la couche de géotextile, contre la couche de géotextile enduite et
- une deuxième étape (120) d'enduction d'une face supérieure de la couche de fibres par une résine biodégradable.

2. Procédé (10) selon la revendication 1, qui comporte, en aval de l'étape (105) de positionnement et/ou de l'étape (115) de collage, une étape (125, 130) de tamponnage de la face supérieure de la couche la plus éloignée du moule.

3. Procédé (10) selon l'une des revendications 1 ou 2, qui comporte une étape (140) de positionnement de nervures en matériau naturel épousant la forme du moule, ces nervures étant couvertes par la couche de géotextile lors de l'étape (105) de positionnement de ce géotextile.

4. Procédé (10) selon la revendication 3, dans lequel les nervures sont des tiges en bois ou en métal positionnées contre le moule ou entre deux couches successives.

5. Procédé (10) selon l'une des revendications 1 à 4, dans lequel le géotextile est un géotextile de fibres naturelles non tissées.

6. Procédé (10) selon l'une des revendications 1 à 5, dans lequel le géotextile comporte des fragments de fibre technique synthétique.

7. Procédé (10) selon la revendication 6, dans lequel les fragments de fibre technique synthétique sont des sous-produits et/ou des déchets de fibre de carbone.

8. Procédé (10) selon l'une des revendications 1 à 7, qui comporte, de plus, une étape d'incorporation dans les fibres de cordes ou de câbles parallèles à la longueur de la nappe de fibres.

9. Pièce composite (60) obtenue par un procédé selon l'une des revendications 1 à 8, comportant, successivement, dans son épaisseur :
- une couche (605) de géotextile,
- une résine (610) biodégradable enduite contre la couche de géotextile,
- une couche (615) de fibres, présentant une rigidité supérieure à la couche de géotextile,
- une résine (620) biodégradable enduite contre la couche de fibres.

10. Pièce (60) selon la revendication 9, dans laquelle le géotextile mis en oeuvre est un géotextile de fibres naturelles non tissées.

11. Pièce (60) selon la revendication 10, dans laquelle le géotextile non tissé comporte :
- des tiges de végétaux écrasées d'un diamètre supérieur à cinq millimètres,
- des fragments de tiges végétales et
- des fibres végétales partiellement attachées aux dites tiges écrasées,
les tiges et fragments de tiges étant entrelacés par des liaisons mécaniques produites par projection d'eau.

12. Pièce (60) selon l'une des revendications 10 ou 11, dans laquelle la couche (205) de géotextile comporte des fragments (230) de fibre technique synthétique.

13. Pièce (60) selon la revendication 12, dans laquelle les fragments (230) de fibre technique synthétique sont des sous-produits et/ou des déchets de fibre de carbone.

14. Pièce (60) selon l'une des revendications 9 à 13, dans laquelle la couche (215) de fibres est une couche en fibres naturelles biodégradables.

15. Embarcation (50), comportant une paroi formée d'au moins une pièce (40) composite selon l'une des revendications 9 à 14.

## Patentansprüche

1. Verfahren (10) zum Formen eines Verbundbauteils, aufweisend:
- einen Schritt (105) des Positionierens einer Geotextilschicht auf einer Form, sodass eine Unterseite der Geotextilschicht gegen die Form positioniert ist,
- einen ersten Schritt (110) des Beschichtens einer Oberseite der während des Positionierungsschritts positionierten Geotextilschicht mit einem biologisch abbaubaren Harz,
- einen Schritt (115) des Verklebens einer Faserschicht, die eine höhere Steifigkeit als die Geotextilschicht aufweist, gegen die beschichtete Geotextilschicht und
- einen zweiten Schritt (120) des Beschichtens einer Oberseite der Faserschicht mit einem biologisch abbaubaren Harz.

2. Verfahren (10) nach Anspruch 1, das nach dem Positionierungsschritt (105) und/oder dem Verklebeschritt (115) einen Schritt (125, 130) des Pufferns der Oberseite der von der Form am weitesten entfernten Schicht umfasst.

3. Verfahren (10) nach einem der Ansprüche 1 oder 2, das einen Schritt (140) des Positionierens von Rippen aus Naturmaterial aufweist, die sich an die Form der Form anpassen, wobei diese Rippen während des Schritts (105) des Positionierens dieses Geotextils von der Geotextilschicht bedeckt sind.

4. Verfahren (10) nach Anspruch 3, wobei die Rippen Holz- oder Metallstäbe sind, die gegen die Form oder zwischen zwei aufeinanderfolgenden Schichten positioniert sind.

5. Verfahren (10) nach einem der Ansprüche 1 bis 4, wobei das Geotextil ein Geotextil aus natürlichen Vliesfasern ist.

6. Verfahren (10) nach einem der Ansprüche 1 bis 5, wobei das Geotextil synthetische technische Faserfragmente aufweist.

7. Verfahren (10) nach Anspruch 6, wobei die synthetischen technischen Faserfragmente Nebenprodukte und/oder Abfälle von Kohlenstofffasern sind.

8. Verfahren (10) nach einem der Ansprüche 1 bis 7, das ferner einen Schritt des Einbettens in die Fasern von Seilen oder Kabeln parallel zur Länge der Fasermatte umfasst.

9. Verbundbauteil (60), das durch ein Verfahren nach einem der Ansprüche 1 bis 8 erhalten wird, das nacheinander in seiner Dicke aufweist:
- eine Geotextilschicht (605),
- ein biologisch abbaubares Harz (610), das gegen die Geotextilschicht beschichtet ist,
- eine Faserschicht (615), die eine höhere Steifigkeit aufweist als die Geotextilschicht,
- ein biologisch abbaubares Harz (620), das gegen die Faserschicht beschichtet ist.

10. Bauteil (60) nach Anspruch 9, wobei das verwendete Geotextil ein Geotextil aus natürlichen Vliesfasern ist.

11. Bauteil (60) nach Anspruch 10, wobei das Geotextilvlies aufweist:
- gequetschte Pflanzenstiele mit einem Durchmesser von mehr als fünf Millimetern,
- Pflanzenstielfragmente und
- Pflanzenfasern, die teilweise an den gequetschten Stielen befestigt sind,
wobei die Stiele und Stielfragmente durch mechanische Verbindungen, die durch Spritzwasser erzeugt werden, miteinander verflochten sind.

12. Bauteil (60) nach einem der Ansprüche 10 oder 11, wobei die Geotextilschicht (205) synthetische technische Faserfragmente (230) aufweist.

13. Bauteil (60) nach Anspruch 12, wobei die synthetischen technischen Faserfragmente (230) Nebenprodukte und/oder Abfälle von Kohlenstoffasern sind.

14. Bauteil (60) nach einem der Ansprüche 9 bis 13, wobei die Faserschicht (215) eine Schicht aus biologisch abbaubaren Naturfasern ist.

15. Boot (50), das eine Wand umfasst, die aus mindestens einem Verbundbauteil (40) nach einem der Ansprüche 9 bis 14 gebildet ist.

## Claims

1. Method (10) of moulding a composite component, comprising:
- a step (105) of positioning a geotextile layer on a mould so that an underside of the geotextile layer is positioned against the mould;
- a first step (110) of coating with a biodegradable resin a top face of the geotextile layer positioned during the positioning step;
- a step (115) of bonding a layer of fibres, whose rigidity is higher than that of the geotextile layer, onto the coated geotextile layer; and
- a second step (120) of coating with a biodegradable resin a top face of the layer of fibres.

2. Method (10) according to claim 1, which comprises, after the positioning step (105) and/or the bonding step (115), a step (125, 130) of stamping the upper surface of the layer farthest from the mould.

3. Method (10) according to one of claims 1 or 2, which comprises a step (140) of positioning ribs made of a natural material matching the shape of the mould, these ribs being covered by the geotextile layer during the step (105) of positioning this geotextile.

4. Method (10) according to claim 3, wherein the ribs are rods made of wood or metal positioned against the mould or between two successive layers.

5. Method (10) according to one of claims 1 to 4, wherein the geotextile is a geotextile made of non-woven natural fibres.

6. Method (10) according to one of claims 1 to 5, wherein the geotextile layer comprises fragments of technical synthetic fibres.

7. Method (10) according to claim 6, wherein the fragments of technical synthetic fibres are carbon fibre waste and/or by-products.

8. Method (10) according to one of claims 1 to 7, which also comprises a step of incorporating ropes or cables into the fibres, parallel to the length of the fibre mat.

9. Composite component (60) obtained by a method according to any one of claims 1 to 8, comprising, successively, in its thickness:
- a geotextile layer (605);
- a biodegradable resin (610) coated onto the geotextile layer;
- a layer (615) of fibres, whose rigidity is higher than that of the geotextile layer;
- a biodegradable resin (620) coated onto the layer of fibres.

10. Component (60) according to claim 9, wherein the geotextile utilised is a geotextile made of non-woven natural fibres.

11. Component (60) according to claim 10, wherein the non-woven geotextile comprises:
- crushed vegetation stems having a diameter of more than five millimetres;
- vegetation stem fragments; and
- vegetable fibres partially attached to said crushed stems,
the stems and stem fragments being interwoven by means of mechanical links produced by spraying water.

12. Component (60) according to one of claims 10 or 11, wherein the geotextile layer (205) comprises fragments (230) of technical synthetic fibres.

13. Component (60) according to claim 12, wherein the fragments (230) of technical synthetic fibres are carbon fibre waste and/or by-products.

14. Component (60) according to one of claims 9 to 13, wherein the layer (215) of fibres is a layer made of biodegradable natural fibres.

15. Craft (50), comprising a side formed from at least one composite component (40) according to one of claims 9 to 14.
